# FASCICULE DE BREVET EUROPEEN

(11) **EP 0 352 153 B1**
(45) Date de publication et mention de la délivrance du brevet: **18.08.1993**
(21) Numéro de dépôt: 89401814.2
(22) Date de dépôt: 26.06.1989
(51) Int. Cl.: G02B 27/00

(54) **Dispositif d'affichage d'informations sur le pare-brise d'un véhicule notamment automobile**
Anzeigevorrichtung, um Informationen auf der Windschutzscheibe eines Fahrzeugs, insbesondere eines Automobils darzustellen
Device to present information on the windscreen of a vehicle, more particularly for a car

(30) Priorité: 20.07.1988 FR 8809839
(43) Date de publication de la demande: 24.01.1990
(73) Titulaire: AUTOMOBILES PEUGEOT, 75116 Paris (FR); AUTOMOBILES CITROEN, 92200 Neuilly-sur-Seine (FR)
(72) Inventeur: Gaches Philippe, 92500 Rueil Malmaison (FR)
(74) Mandataire: Polus, Camille

(56) Documents cités:
- EP-A- 0 216 692
- WO-A-86/05648
- US-A- 3 887 273
- US-A- 4 635 033
- PATENT ABSTRACTS OF JAPAN, vol. 10, no. 40 (M-454)[2097], 18 février 1986, page 6M 454 & JP-A-60 191 847
- PATENT ABSTRACTS OF JAPAN, vol. 10, no. 159 (M-486)[2215], 7 juin 1986, page 70 M 486 & JP-A-61 12 450

## Description

La présente invention concerne un dispositif d'affichage d'informations sur le pare-brise d'un véhicule notamment automobile.

On connait dans l'état de la technique, un certain nombre de dispositifs d'affichage de ce type.

Dans les dispositifs d'affichage connus,les informations sont présentées par exemple au conducteur d'un véhicule automobile dans une position telle qu'il n'ait pas à baisser la tête pour prendre connaissance de celles-ci.

Il est ainsi possible d'éviter au conducteur d'avoir à quitter la route du regard lorsqu'il souhaite prendre connaissance des différentes informations concernant le fonctionnement de son véhicule.

En effet, cette opération prend environ 0,4 seconde dans le meilleur des cas, ce qui peut être préjudiciable à la sécurité de conduite dans certaines conditions.

Actuellement,les dispositifs d'affichage dits " tête haute " utilisent des dispositifs de réflexion disposés sur le pare-brise du véhicule ou placés sur la partie haute du tableau de bord de celui-ci donc dans le champ de vision normale du conducteur.

La luminosité des informations présentées doit donc être telle que les informations soient encore lisibles par le conducteur, même en présence d'un fort éclairement extérieur, par exemple par temps ensoleillé. Cette luminosité n'a pas autant d'importance dans le cas où les moyens d'affichage d'informations sont disposés dans le tableau de bord du véhicule, le soleil ne perturbant pas la vision des informations à cet emplacement.

Les dispositifs d'affichage dits "tête haute" connus dans l'état de la technique, comprennent des dispositifs d'affichage actifs pour réaliser cette fonction. En effet, ces dispositifs comprennent par exemple des tubes à rayons cathodiques d'affichage d'informations, c'est-à-dire que ces dispositifs émettent de la lumière, et un dispositif réfléchissant qui peut être constitué par un miroir holographique ou plus simplement semi-réfléchissant, disposé dans le champ de vision directe du conducteur. On conçoit donc que ces dispositifs d'affichage doivent être capables d'émettre une puissance lumineuse très importante pour que les informations soient lisibles par l'utilisateur, même en présence d'un fort éclairement extérieur.

Or, ces dispositifs sont actuellement d'un coût et d'un encombrement relativement importants, ce qui rend leur intégration, par exemple en grande série dans des véhicules automobiles, extrêmement difficile voire impossible.

On connaît également du document EP-A-0 216 692 un dispositif conforme au préambule de la revendication 1.

Cependant ce dispositif ne permet pas l'affichage d'informations évolutives dans le temps et présente les mêmes inconvénients que les différents dispositifs décrits précédemment à propos de la luminosité des informations présentées.

Le but de l'invention est donc de résoudre ces problèmes en proposant un dispositif d'affichage, qui soit simple, fiable, d'un prix de revient peu élevé, d'un encombrement relativement faible, et qui permette d'afficher des informations sur le pare-brise du véhicule de manière lisible quel que soit l'éclairement extérieur.

A cet effet, l'invention a pour objet un dispositif d'affichage d'informations par réflexion sur le pare-brise d'un véhicule notamment automobile, comportant, dans le tableau de bord du véhicule, des moyens d'affichage d'informations comprenant des éléments d'informations et un fond, au moins une portion des éléments d'informations possédant un pouvoir réfléchissant supérieur au fond de ces moyens, et une source lumineuse éclairant les moyens d'affichage, afin que l'image des moyens d'affichage d'informations, ainsi éclairés se réfléchisse sur une portion du pare-brise du véhicule et soit observable depuis l'intérieur du véhicule par réflexion d'une portion de la lumière émise par la source sur les moyens d'affichage et sur une portion du pare-brise du véhicule, caractérisé en ce que les éléments d'informations sont revêtus d'une pellicule de matière réfléchissante.

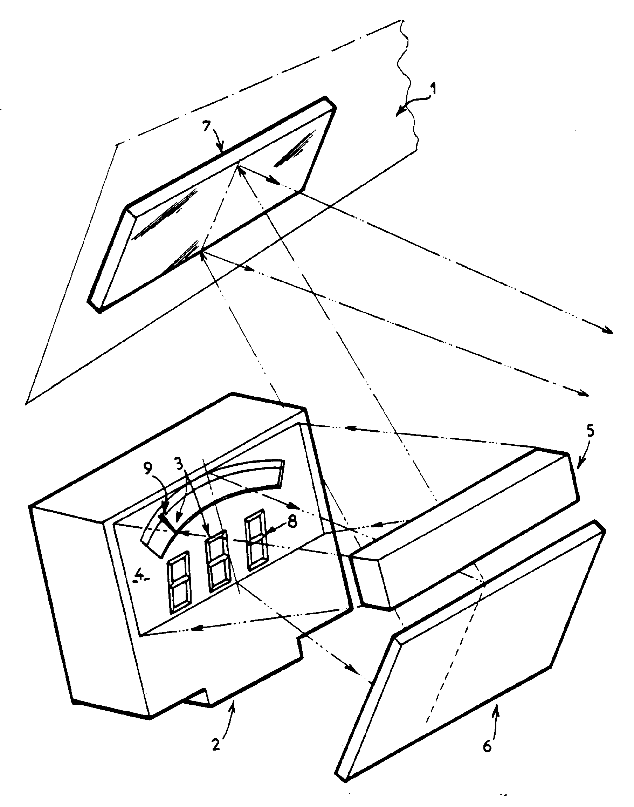

L'invention sera mieux comprise à l'aide de la description qui va suivre, donnée uniquement à titre d'exemple et faite en se référant au dessin annexé, qui représente un schéma d'un dispositif d'affichage d'informations selon l'invention.

Comme on peut le voir sur cette figure, un dispositif d'affichage d'informations sur le pare-brise 1 d'un véhicule, par exemple automobile, selon l'invention, comporte dans le tableau de bord du véhicule, des moyens d'affichage 2 d'informations comprenant des éléments d'informations par exemple 3 et un fond 4.

Comme cela sera décrit plus en détail par la suite, au moins une portion des éléments d'informations 3 possède un pouvoir réfléchissant supérieur au fond 4 de ces moyens.

Le dispositif selon l'invention comporte également une source lumineuse 5 d'éclairement de ces moyens d'affichage 2 afin que l'image des moyens d'affichage d'informations ainsi éclairés se réfléchisse par exemple sur un miroir 6 puis sur une portion du pare-brise du véhicule sur laquelle est par exemple disposé un miroir holographique ou semi-transparent 7.

Le dispositif, tel qu'il vient d'être décrit, permet de remplacer les moyens d'affichage actifs utilisés dans l'état de la technique par des moyens d'affichage passifs, l'image de ces moyens d'affichage se réfléchissant sur le miroir 6 puis sur le miroir holographique ou semi-transparent 7 disposé sur le pare-brise du véhicule dans une position de vision directe par l'utilisateur. L'éclairement de ces moyens d'affichage est assuré par la source de lumière extérieure 5 et la luminosité de l'image ainsi observée par l'utilisateur sur le miroir 7 peut être facilement réglée en agissant sur la puissance lumineuse de cette source lumineuse 5. Cette source lumineuse peut être constituée par exemple par des lampes permettant d'obtenir un éclairement uniforme de toute la zone utile des moyens d'affichage d'informations.

Il est à noter que la disposition relative de la source lumineuse 5, des moyens d'affichage d'informations 2 et du miroir 6, dépend de l'endroit du pare-brise où l'on désire visualiser les informations. Cette disposition est donc déterminée par l'homme du métier en fonction des besoins.

Les moyens d'affichage d'informations peuvent être constitués par exemple par des moyens d'affichage du type électromagnétique ou électromécanique à segments 8, ces segments étant montés déplaçables dans les moyens d'affichage, entre deux positions par l'intermédiaire par exemple de moyens magnétiques de manière connue en soi. Dans l'une de ces positions, les segments d'informations 8 présentent une couleur par exemple identique à celle du fond 4 des moyens d'affichage d'informations, tandis que dans l'autre position, les segments d'informations 8 possèdent un pouvoir réfléchissant supérieur au fond 4 de ces moyens, de sorte qu'il est possible de distinguer les informations.

Ainsi par exemple, les segments d'informations peuvent être recouverts d'une pellicule de matière réfléchissante par exemple par collage sur ces segments, d'une bande adhésive réfléchissante ou en déposant sur ceux-ci une couche de particules métalliques réfléchissantes constituées par exemple d'aluminium et en polissant cette couche de manière à uniformiser le pouvoir réfléchissant des segments 8.

Il est également possible d'atténuer ou de modifier la couleur de la lumière réfléchie, par exemple en déposant une pellicule de peinture sur les segments, respectivement grise ou de couleur.

Bien entendu, il va de soi que les moyens d'affichage d'informations peuvent comprendre des éléments d'informations constitués par d'autres moyens que les segments décrits précédemment.

Par exemple, ces éléments d'informations peuvent également être constitués par une aiguille 9 ou par tout autre élément d'affichage d'informations, comme par exemple des éléments d'affichage à allumage successif encore appelés "bargraph", comme on peut en rencontrer sur certains véhicules automobiles,par exemple pour indiquer la vitesse de celui-ci.

Les éléments d'informations peuvent également être constitués d'afficheurs électrochimiques tels que des afficheurs électrolytiques qui permettent de faire apparaître ou disparaître des segments réfléchissants. On peut par exemple réaliser les segments réfléchissants par dépôt électrolytique de sels d'argent sur la face visible de chaque afficheur. Dans ce cas, bien sûr, les éléments ne sont pas couverts d'une pellicule réfléchissante comme précédemment, mais ils peuvent éventuellement être couverts d'une pellicule de peinture pour atténuer ou modifier la couleur.

Le miroir 7, comme décrit précédemment, peut être consitué par exemple par un miroir holographique.

On conçoit donc que le dispositif selon l'invention est beaucoup plus simple et moins encombrant que les dispositifs utilisés dans l'état de la technique, dans la mesure où la luminosité des informations se réfléchissant sur le pare-brise du véhicule, ne dépend plus de la puissance d'émission des moyens d'affichage d'informations, mais d'une source lumineuse d'éclairement de ceux-ci. Il est de ce fait beaucoup plus simple et moins onéreux d'adapter la puissance de cette source lumineuse aux conditions d'éclairement extérieur, que d'adapter la puissance des moyens d'affichage d'informations.

Selon un autre mode de réalisation, il est possible de se passer du miroir de réflexion 6 dans le cas où les moyens d'affichage d'informations sont adaptés pour afficher des informations inversées par rapport à celles qui seraient directement lisibles par un utilisateur.

Dans ce cas, l'image des moyens d'affichage d'informations ainsi éclairés, peut se réfléchir directement sur le pare-brise du véhicule et être directement lisible par l'utilisateur.

Toutes sortes d'informations peuvent ainsi être affichées, que ces informations traitent de la vitesse du véhicule, de l'état de celui-ci ou de son environnement.

## Revendications

1. Dispositif d'affichage d'informations par réflexion sur le pare-brise (1) d'un véhicule notamment automobile, comportant, dans le tableau de bord du véhicule, des moyens (2) d'affichage d'informations comprenant des éléments d'informations (3,8,9) et un fond (4), au moins une portion des éléments d'informations (3,8,9) possédant un pouvoir réfléchissant supérieur au fond (4) de ces moyens, et une source lumineuse (5) éclairant les moyens d'affichage (2), afin que l'image des moyens d'affichage d'informations (2), ainsi éclairés se réfléchisse sur une portion (7) du pare-brise (1) du véhicule et soit observable depuis l'intérieur du véhicule par réflexion d'une portion de la lumière émise par la source sur les moyens d'affichage et sur ladite portion du pare-brise du véhicule, caractérisé en ce que les éléments d'informations sont revêtus d'une pellicule de matière réfléchissante.

2. Dispositif selon la revendication 1, caractérisé en ce que les éléments d'informations (3,8,9) sont inversés sur les moyens d'affichage d'informations (2) et en ce que l'image de ces moyens est réfléchie directement sur le pare-brise (1) du véhicule pour que les informations soient directement lisibles par l'utilisateur.

3. Dispositif selon la revendication 1, caractérisé en ce que les éléments d'informations sont directement lisibles par l'utilisateur sur les moyens d'affichage d'informations (2) et en ce que l'image des moyens d'affichage d'informations (2) est réfléchie par un miroir (6) avant sa réflexion sur le pare-brise (1) du véhicule.

4. Dispositif selon l'une quelconque des revendications précédentes, caractérisé en ce que le pare-brise (1) du véhicule comporte un miroir holographique ou semi-transparent (7) sur lequel est réfléchie l'image des moyens d'affichage d'informations.

5. Dispositif selon l'une quelconque des revendications précédentes, caractérisé en ce que les éléments d'informations comprennent des segments (8) d'un afficheur du type électromagnétique ou électromécanique.

6. Dispositif selon l'une quelconque des revendications 1 à 4, caractérisé en ce que les éléments d'informations comprennent une aiguille (9) d'indication d'informations.

7. Dispositif selon l'une quelconque des revendications précédentes, caractérisé en ce que la pellicule de matière réfléchissante est formée par une bande adhésive réfléchissante disposée sur les éléments d'informations (8,9).

8. Dispositif selon l'une quelconque des revendications précédentes, caractérisé en ce que la pellicule de matière réfléchissante est formée par une pellicule de particules métalliques réfléchissantes déposée sur les éléments d'informations (8,9).

9. Dispositif selon la revendication 8, caractérisé en ce que la pellicule de particules métalliques est polie.

10. Dispositif selon l'une des revendications 8 ou 9, caractérisé en ce que la pellicule de particules métalliques comprend de l'aluminium.

11. Dispositif selon l'une quelconque des revendications précédentes, caractérisé en ce que les éléments d'informations (3) comprennent des segments (8) d'un afficheur de type électrochimique, notamment électrolytique.

12. Dispositif selon l'une quelconque des revendications 1 à 11, caractérisé en ce que les éléments d'informations (8, 9) munis de leurs moyens réfléchissants sont couverts d'une pellicule de peinture grise.

13. Dispositif selon l'une quelconque des revendications 1 à 11, caractérisé en ce que les éléments d'informations (8,9) munis de leurs moyens réfléchissants sont couverts d'une pellicule de peinture de couleur.

14. Dispositif selon l'une quelconque des revendications précédentes, caractérisé en ce que la source lumineuse (5) est uniforme sur toute la partie éclairée des moyens d'affichage d'informations (2).

15. Dispositif selon l'une quelconque des revendications précédentes, caractérisé en ce qu'il comporte des moyens de réglage de la puissance de la source lumineuse (5).

## Patentansprüche

1. Vorrichtung zur Anzeige von Information durch Reflexion an der Windschutzscheibe (1) eines Fahrzeugs, insbesondere eines kraftfahrzeugs, mit, im Armaturenbrett des kraftfahrzeugs, Informations-Anzeigemitteln (2), die Informationselemente (3, 8, 9) und einen Hintergrund (4) enthalten, wobei wenigstens ein Teil der Informationselemente (3, 8,9) ein größeres Reflexionsvermögen als der Hintergrund (4) dieser Mittel besitzt, und einer Lichtquelle (5), die die Anzeigemittel (2) beleuchtet, damit das Bild der so beleuchteten Informations-Anzeigemittel (2) sich an einem Teil (7) der Windschutzscheibe (1) des Fahrzeugs spiegelt und durch Reflexion eines Teils des von der quelle ausgesandten Lichtes an den Anzeigemitteln und dem genannten Teil der Windschutzscheibe des Fahrzeugs vom Inneren des Fahrzeugs aus sichtbar ist, dadurch **gekennzeichnet**, daß die Informationselemente mit einem Überzug aus reflektierendem Material versehen sind.

2. Vorrichtung nach Anspruch 1, dadurch **gekennzeichnet**, daß die Informationselemente (3, 8, 9) auf den Informations-Anzeigemitteln (2) spiegelverkehrt sind und daß das Bild dieser Mittel direkt an der Windschutzscheibe (1) des Fahrzeugs gespiegelt wird, so daß die Informationen durch den Benutzer direkt lesbar sind.

3. Vorrichtung nach Anspruch 1, dadurch **gekennzeichnet**, daß die Informationselemente in für den Benutzer direkt lesbarer Onentierung auf den Informations-Anzeigemitteln (2) angeordnet sind und daß das Bild der Informations-Anzeigemittel (2) an einem Spiegel (6) gespiegelt wird, bevor es an der Windschutzscheibe (1) des Fahrzeugs reflektiert wird.

4. Vorrichtung nach einem der vorstehenden Ansprüche, dadurch **gekennzeichnet**, daß die Windschutzscheibe (1) des Fahrzeugs einen holographischen oder halbdurchlässigen Spiegel (7) aufweist, an dem das Bild der Informations-Anzeigemittel gespiegelt wird.

5. Vorrichtung nach einem der vorstehenden Ansprüche, dadurch **gekennzeichnet**, daß die Informationselemente Segmente (8) eines elektromagnetischen oder elektromechanischen Anzeigeelements umfassen.

6. Vorrichtung nach einem der Ansprüche 1 bis 4, dadurch **gekennzeichnet**, daß die Informationselemente einen Zeiger (9) zur Anzeige von Information umfassen.

7. Vorrichtung nach einem der vorstehenden Ansprüche, dadurch **gekennzeichnet**, daß der Überzug aus reflektierendem Material durch ein reflektierendes Klebeband gebildet wird, das auf den Informationselementen (8,9) angebracht ist.

8. Vorrichtung nach einem der vorstehenden Ansprüche, dadurch **gekennzeichnet**, daß der Überzug aus reflektierendem Material durch einen Überzug aus reflektierenden Metallpartikeln gebildet wird, der auf den Informationselementen (8,9) angebracht ist.

9. Vorrichtung nach Anspruch 8, dadurch **gekennzeichnet**, daß der Üerzug aus Metallpartikeln poliert ist.

10. Vorrichtung nach Anspruch 8 oder 9, dadurch **gekennzeichnet**, daß der Überzug aus Metallpartikeln Aluminium enthält.

11. Vorrichtung nach einem der vorstehenden Ansprüche, dadurch **gekennzeichnet**, daß die Informationselemente (3) Segmente (8) eines elektrochemischen, insbesondere elektrolytischen Anzeigeelements umfassen.

12. Vorrichtung nach einem der Ansprüche 1 bis 11, dadurch **gekennzeichnet**, daß die mit ihren reflektierenden Mitteln versehenen Informationselemente (8,9) mit einer Schicht aus grauer Farbe bedeckt sind.

13. Vorrichtung nach einem der Ansprüche 1 bis 11, dadurch **gekennzeichnet**, daß die mit ihren reflektierenden Mitteln versehenen Anzeigeelemente (8,9) mit einer Schicht aus bunter Farbe bedeckt sind.

14. Vorrichtung nach einem der vorstehenden Ansprüche, dadurch **gekennzeichnet**, daß die Lichtquelle (5) auf dem gesamten beleuchteten Teil der Informations-Anzeigemittel (2) gleichmäßig ist.

15. Vorrichtung nach einem der vorstehenden Ansprüche, dadurch **gekennzeichnet**, daß sie Mittel zur Regelung der Helligkeit der Lichtquelle (5) aufweist.

## Claims

1. Device for displaying information, by reflection, on the windscreen (1) of a motor vehicle in particular, comprising, in the dashboard of the vehicle, information display means (2) comprising information elements (3,8,9) and a background (4), at least a portion of the information elements (3,8,9) having a reflective power which is greater than the background (4) of these means, and a light source (5) illuminating the display means (2), so that the image of the information display means (2) thus illuminated is reflected on a portion (7) of the windscreen (1) of the vehicle and can be observed from inside the vehicle by reflection of a portion of the light emitted by the source on the display means and on the said portion of the windscreen of the vehicle, characterised in that the information elements are coated with a film of reflecting material.

2. Device according to Claim 1, characterised in that the information elements (3,8,9) are inverted on the information display means (2) and in that the image of these means is reflected directly onto the windscreen (1) of the vehicle so that the information can be directly read by the user.

3. Device according to Claim 1, characterised in that the information elements can be directly read by the user on the information display means (2) and in that the image of the information display means (2) is reflected by a mirror (6) before being reflected onto the windscreen (1) of the vehicle.

4. Device according to any one of the preceding claims, characterised in that the windscreen (1) of the vehicle comprises a hologram plate or semi-silvered mirror (7) onto which the image of the information display means is reflected.

5. Device according to any one of the preceding claims, characterised in that the information elements comprise segments (8) of an indicator of the electromagnetic or electromechanical type.

6. Device according to any one of Claims 1 to 4, characterised in that the information elements comprise an information indicating needle (9).

7. Device according to any one of the preceding claims, characterised in that the film of reflecting material is formed by a reflective adhesive strip arranged on the information elements (8,9).

8. Device according to any one of the preceding claims, characterised in that the film of reflective material is formed by a film of reflective metal particles arranged on the information elements (8,9).

9. Device according to Claim 8, characterised in that the film of metal particles is polished.

10. Device according to either of Claims 8 and 9, characterised in that the film of metal particles comprises aluminium.

11. Device according to any one of the preceding claims, characterised in that the information elements (3) comprise segments (8) of an indicator of the electrochemical or particularly electrolytic type.

12. Device according to any one of Claims 1 to 11, characterised in that the information elements (8,9) provided with their reflective means are covered with a film of grey paint.

13. Device according to any one of Claims 1 to 11, characterised in that the information elements (8,9) provided with their reflective means are covered with a film of coloured paint.

14. Device according to any one of the preceding claims, characterised in that the light source (5) is uniform over the whole illuminated part of the information display means (2).

15. Device according to any one of the preceding claims, characterised in that it comprises means for adjusting the power of the light source (5).
